# EUROPÄISCHE PATENTSCHRIFT

(11) **EP 1 842 019 B1**
(45) Veröffentlichungstag und Bekanntmachung des Hinweises auf die Patenterteilung: **08.08.2012**
(21) Anmeldenummer: 06706241.4
(22) Anmeldetag: 16.01.2006
(51) Int. Cl.: F28D 7/00, F28F 3/12, F28D 1/053, B60H 1/00, F25B 39/02, F28D 1/04

(54) **VERDAMPFER, INSBESONDERE FÜR EINE KLIMAANLAGE EINES KRAFTFAHRZEUGES**
EVAPORATOR, IN PARTICULAR FOR AN AIR-CONDITIONING SYSTEM OF A MOTOR VEHICLE
EVAPORATEUR DESTINE NOTAMMENT AU SYSTEME DE CLIMATISATION D'UN VEHICULE AUTOMOBILE

(30) Priorität: 14.01.2005 DE 102005002060; 13.10.2005 DE 102005049406
(43) Veröffentlichungstag der Anmeldung: 10.10.2007
(73) Patentinhaber: Behr GmbH & Co. KG, 70469 Stuttgart (DE)
(72) Erfinder: HADLER, Jens, 70197 Stuttgart (DE); KOHL, Michael, 74321 Bietigheim (DE); SCHMADL, Dieter, 71672 Marbach (DE); SEEWALD, Wolfgang, 70190 Stuttgart (DE); WALTER, Christoph, 70469 Stuttgart (DE); ZWITTIG, Eberhard, 73269 Hochdorf (DE)
(74) Vertreter: Grauel, Andreas
(86) Internationale Anmeldenummer: PCT/EP2006/000318
(87) Internationale Veröffentlichungsnummer: WO 2006/074958

(56) Entgegenhaltungen:
- EP-A- 0 566 854
- EP-A2- 1 508 462
- DE-A1- 19 646 349
- DE-C1- 10 214 965
- JP-A- 61 092 910
- US-A- 3 315 731
- PATENT ABSTRACTS OF JAPAN Bd. 2003, Nr. 09, 3. September 2003 (2003-09-03) & JP 2003 139478 A (EE R C:KK), 14. Mai 2003 (2003-05-14)

## Beschreibung

Die Erfindung betrifft einen Verdampfer, insbesondere für eine Klimaanlage eines Kraftfahrzeuges nach dem Oberbegriff des Patentanspruches 1.

Verdampfer für Kraftfahrzeug-Klimaanlagen sind in verschiedenen Bauweisen bekannt, und zwar als mechanisch gefügte Rundrohrsysteme sowie als gelötete Flachrohr-, Platten- oder Scheibenwärmeübertrager. Durch die DE 198 26 881 A1 der Anmelderin wurde ein gelöteter zweireihiger Flachrohrverdampfer bekannt, wobei zwischen den Flachrohren Wellrippen angeordnet sind, welche von Umgebungsluft beaufschlagt werden, die im Verdampfer abgekühlt und dem Fahrzeuginnenraum zugeführt wird. Der Verdampfer ist in einen Kältemittelkreislauf der Klimaanlage eingebunden und wird von einem Kältemittel (R134a) durchströmt. Ein gelöteter Scheibenverdampfer wurde beispielsweise durch die DE 198 14 050 bekannt, wobei auch hier zwischen den Scheiben von Umgebungsluft beaufschlagbare Wellrippen angeordnet sind. Der Verdampfer ist in einem Klimagerät innerhalb eines Luftkanals angeordnet.

Im Kraftfahrzeug gibt es eine Vielzahl von elektronischen Bauelementen oder Baueinheiten, welche Wärme entwickeln und daher zu kühlen sind. Hierfür wird vielfach Umgebungsluft als Kühlmedium herangezogen. In der DE 89 14 525 U1 der Anmelderin wird eine elektronische Baueinheit durch den Ansaugluftstrom eines Gebläses gekühlt, wobei ein Deckel des Gebläses als Kühlkörper ausgebildet ist. Eine weitere Möglichkeit zur Kühlung von elektronischen Bauelementen wurde durch die DE 37 03 873 A1 der Anmelderin bekannt, wobei ein Kühlkörper aus einem Grundkörper mit einem stoffschlüssig verbundenen Rippenpaket besteht, welches von Kühlluft beaufschlagt wird. Der Kühlkörper ist mit seinem Grundkörper Wärme leitend mit der Elektronikeinheit verbunden.

Eine weitere Kühlvorrichtung zur Kühlung elektronsicher Bauelemente durch Konvektion wurde in der DE 198 06 978 A1 der Anmelderin vorgeschlagen, wobei der Kühlkörper Wellrippen aufweist, welche von einem Kühlluftstrom beaufschlagt werden.

Zur Steigerung des Kühleeffektes wurde in der DE 41 31 739 A1 eine Kühleinrichtung mit einem Hohlraum vorgeschlagen, welcher von einer Kühlflüssigkeit zur Wärmeabfuhr durchströmt wird. Der Hohlraum weist zur Steigerung der Wärmeübertragung Turbulenzeinlagen auf und ist über eine Grundplatte Wärme leitend mit der Elektronikeinheit verbunden.

Eine ähnliche Kühlvorrichtung für elektronische Bauelemente wurde durch die DE 199 11 205 A1 der Anmelderin vorgeschlagen, wobei ein Hohlraum von einem flüssigen Kühlmittel durchströmt wird, welches einem Kühlmittelkühler eines Kraftfahrzeugkühlkreislaufes entnommen und diesem wieder zugeführt wird.

Schließlich wurde in der DE 199 11 204 A1 der Anmelderin eine Kühlvorrichtung für elektronische Bauelemente vorgeschlagen, wobei die Bauelemente in Wärme leitender Verbindung direkt mit einem Kühlmittelkühler eines Kraftfahrzeuges verbunden sind, beispielsweise an den Seitenteilen oder dem Kühlmittelkasten des Kühlers angeordnet sind. Die abzuführende Wärme fließt somit über Wärmeleitung direkt in das Kühlmittel des Kühlers.

Die nach dem Prioritätstag Veröffentlichte EP1508462 zeigt einen Verdampfer gemäβ Oberbegriff des Anspruchs 1 Nachteilig bei den oben erwähnten bekannten Vorschlägen ist, dass die abzuführende Wärme durch die vorhandene Temperatur des Kühlmediums, sei es ein Luftstrom oder ein Flüssigkeitsstrom begrenzt ist. Insbesondere bei hohen Außentemperaturen weisen sowohl der Kühlluftstrom als auch ein dem Kühlmittelkühler entnommener Kühlmittelstrom eine relativ hohe Temperatur auf. Damit ist auch die Kühlleistung begrenzt.

Es ist Aufgabe der vorliegenden Erfindung, eine Kühlvorrichtung für Wärme abgebende Verbraucher, insbesondere in einem Kraftfahrzeug und vorzugsweise für elektronische Bauelemente zu schaffen, welche eine höhere Kühlleistung ermöglicht.

Diese Aufgabe wird durch die Merkmale des Patentanspruches 1 gelöst. Erfindungsgemäß ist vorgesehen, einen Verdampfer, insbesondere einer Kraftfahrzeug-Klimaanlage für die Kühlungszwecke heranzuziehen und in den Verdampfer mindestens ein Kühlelement, welches von einem Kühlmittel durchströmbar ist, zu implementieren. Das Kühlelement befindet sich in Wärme leitendem Kontakt mit dessen das Kältemittel führenden Strömungskanälen, so dass die vom Kühlmittel aufgenommene Wärme an das Kältemittel abgegeben werden kann, welches im Verdampfer eine relativ niedrige Temperatur aufweist. Das Kühlelement ist mit einem das Kühlmittel führenden Kühlkreislauf, einem so genannten Sekundärkreislauf, verbunden, welcher Wärme von zu kühlenden Verbrauchern aufnimmt und zum Verdampfer transportiert, der als Wärmesenke fungiert. Der Verdampfer selbst wird in seinem Betrieb nicht geändert, es erfolgt somit auch kein Eingriff in den Kältemittelkreislauf der Klimaanlage. Grundsätzlich ist als Wärmesenke für die erfindungsgemäße Kühlung jede Bauart von Verdampfer möglich, bevorzugt sind allerdings Flachrohr-, Platten- oder Scheibenverdampfer, welche ebene Flächen zur Verbindung mit dem erfindungsgemäßen Kühlelement bieten. Vorteilhaft ist eine Verlötung des Kühlelementes mit Teilen des Verdampfers, wodurch ein besonders guter Wärmedurchgang erzielt wird. Auch das den Verdampfer durchströmende Kältemittel ist beliebig, d. h. es kann sowohl ein konventionelles Kältemittel wie R134a oder ein alternatives Kältemittel wie R744 (Kohlendioxid) verwendet werden. Auch CO2-Verdampfer bieten gute Möglichkeiten für die Integration von mindestes einem erfindungsgemäßen Kühlelement.

In vorteilhafter Ausgestaltung der Erfindung sind das bzw. die in den Verdampfer integrierten Kühlelemente von einem Kühlmittel, vorzugsweise einem Wasser-Glysantin-Gemisch durchströmbar und an einen separaten Kühlkreislauf, einen Sekundärkreislauf, angeschlossen. Diesem Sekundärkreislauf sind einzelne Wärme abgebende Verbraucher zugeordnet, z. B. elektronische Bauelemente, an welchen das Kühlmittel des Sekundärkreislaufes zwecks Wärmeabfuhr vorbeigeführt wird. Dabei können aus dem eingangs erwähnten Stand der Technik bekannte Kühlkörper Verwendung finden. Das erfindungsgemäße Kühlelement ist vorzugsweise als Rechteckrohr, d. h. kastenförmig ausgebildet, wobei es den Raum zwischen zwei benachbarten Flachrohren, Platten oder Scheiben einnimmt, der beim Standardverdampfer von einer Wellrippe eingenommen wird. Das Kühlelement tritt also an Stelle der Wellrippe und füllt deren Raum aus, wobei - wie erwähnt - die Wärmeleitung durch Verlötung erheblich gesteigert werden kann.

In weiterer vorteilhafter Ausgestaltung der Erfindung kann das Kühlelement ein- oder mehrflutig, d. h. in einer, in zwei oder mehreren Richtungen mit Umlenkung vom Kühlmittel durchströmt werden, wodurch die Kühlleistung beeinflussbar ist. Zur Erhöhung des Wärmeüberganges können Turbulenzeinlagen vorgesehen sein, die ebenfalls mit den Wandungen des Kühlelementes verlötbar sind. Das Kühlelement ist über einen Ein- und Austrittsstutzen kühlmittelseitig mit dem Sekundärkreislauf verbunden, wobei das Kühlmittel durch eine Pumpe umwälzbar ist.

Der Verdampfer weist mindestens ein Kühlelement auf, das mit mindestens einem äußeren Flachrohr stoffschlüssig, insbesondere durch Löten, Schweißen, Kleben usw. und/oder formschlüssig insbesonder durch Clipsen, Schrauben usw. verbunden ist. Intvorteilhafter Weise ist die Breite des Kühlelements beliebig gemäß der erforderlichen Kühlleistung wählbar und ist nicht von Rastermaßen von Rohren, insbesondere Flachrohren, und/oder Rippen, insbesondere Wellrippen, abhängig.

In einer weiteren Ausführung weist der Verdampfer mindestens ein erstes Kühlelement und mindestens ein zweites Kühlelement auf, die besonders vorteilhaft in Reihe durchströmbar sind.

In einer weiteren Ausführung weist der Verdampfer mindestens ein erstes Kühlelement und mindestens ein zweites Kühlelement auf, die parallel durchströmbar sind.

In einer weiteren vorteilhaften Ausgestaltung weist der Verdampfer eine Breite des mindestens einen Kühlelements auf, die unabhängig von mindestens einem Rastermaße mindestens eines Rohres, insbesondere Flachrohres, und/oder mindestens einer Rippe, insbesondere einer Wellrippe, ist.

In einer weiteren vorteilhaften Ausgestaltung weist der Verdampfer eine Breite des mindestens einen Kühlelements auf, die abhängig von mindestens einem Rastermaße mindestens eines Rohres, insbesondere Flachrohres, und/oder mindestens einer Rippe, insbesondere einer Wellrippe, ist.

Nach einer vorteilhaften Weiterbildung der Erfindung ist eine Kühlvorrichtung mit einem Sekundärkreislauf vorgesehen, welcher alternativ an den Motorkühlkreislauf eines Kraftfahrzeuges bzw. an einen im Motorkühlkreislauf angeordneten Heizkörper anschließbar ist. Damit wird der Vorteil erreicht, dass der Sekundärkühlkreislauf bei ausgefallener Klimaanlage redundant ist. Das Kühlmittel des Sekundärkreislaufes wird dann im Heizkörper, der von Luft durchströmt wird, abgekühlt. Die Kühlung der Elektronik kann somit aufrechterhalten werden. In vorteilhafter Ausgestaltung erfolgt die Zuschaltung bzw. Abschaltung des Heizkörpers über Thermostatventile oder elektrisch ansteuerbare Mehrwegeventile. In weiterer vorteilhafter Ausgestaltung ist zwischen Vor- und Rücklauf des Sekundärkreislaufes ein steuerbarer Kurzschluss vorgesehen, wodurch Kondensation vermieden werden kann.

Ausführungsbeispiele der Erfindung sind in der Zeichnung dargestellt und werden im Folgenden näher beschrieben. Es zeigen
- Fg. 1: einen Kältemittelkreislauf mit einem erfindungsgemäßen Verdampfer mit Sekundärkreislauf,
- Fig. 2, 2a: einen erfindungsgemäßen Flachrohrverdampfer mit integriertem Kühlelement,
- Fig. 3, 3a: einen Flachrohrverdampfer mit zwei integrierten Kühlelementen,
- Fig. 4, 4a: einen Verdampfer für ein alternatives Kältemittel (CO2) mit integriertem Kühlelement,
- Fig. 5, 5a, 5b, 5c: ein Kühlelement, zweiflutig durchströmbar,
- Fig. 6, 6a: ein Kühlelement, einflutig durchströmbar,
- Fig.7a: ein Kühlelement, zweiflutig durchströmbar,
- Fig.7b, c, d: ein Kühlelement, einflutig durchströmbar,
- Fig. 8a, 8b 8c, 8d,: verschiedene Anordnungen von Kühlelementen im Verdampfer,

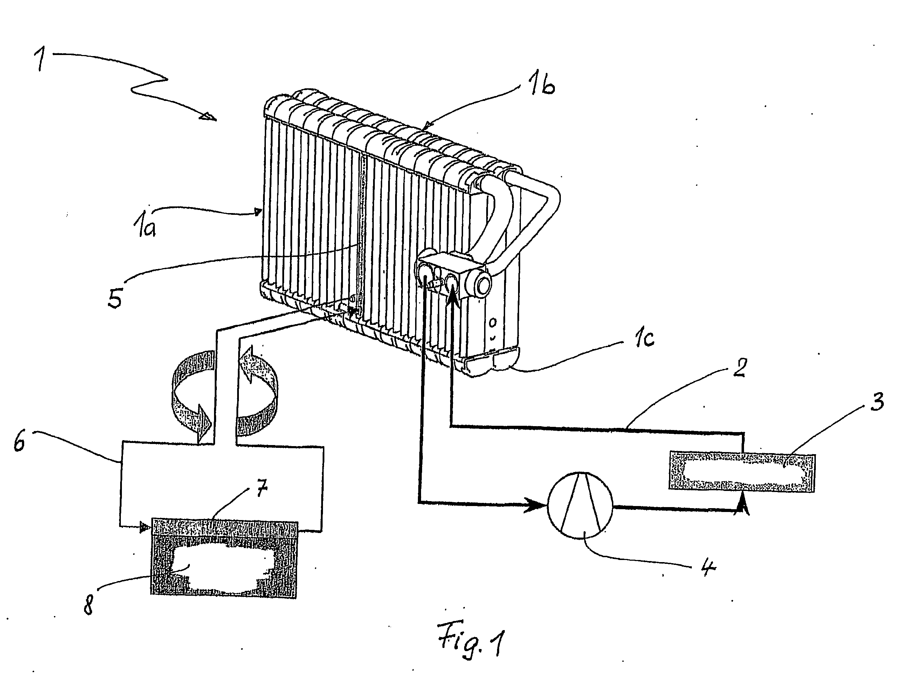

Fig. 1 zeigt einen zweireihigen Flachrohrverdampfer 1, welcher kältemittelseitig an einen Kältemittelkreislauf 2 einer nicht dargestellten Kraftfahrzeug-Klimaanlage angeschlossen ist. Im Kältemittelkreislauf sind neben dem Verdampfer 1 ein Kondensator 3 und ein Kompressor angeordnet. Der Verdampfer 1 entspricht in seiner Bauweise im Wesentlichen dem eingangs genannten Stand der Technik (DE 198 26 881 A1 der Anmelderin) und wird von einem konventionellen Kältemittel (R134a) durchströmt. Der Verdampfer 1 weist somit einen Block 1 a, bestehend aus nicht bezeichneten Flachrohren und Wellrippen, sowie obere und untere Sammelkästen 1 b, 1c auf. Im mittleren Bereich des Blockes 1a ist ein Kühlelement 5 in den Verdampfer 1 implementiert, welches an einen Sekundärkreislauf 6 angeschlossen ist. Im Sekundärkreislauf 6 ist beispielhaft für einen Verbraucher ein Kühlkörper 7 angeordnet, welcher wärmeleitend mit einem zu kühlenden Elektronikbauteil 8 verbunden ist. Kühlelement 5, Sekundärkreislauf 6 und Kühlkörper 7 werden von einem Kühlmedium, vorzugsweise einem flüssigen Kühlmittel, einem Wasser-Glysantin-Gemisch, durchströmt, wobei das Kühlmittel durch eine nicht dargestellte Pumpe umwälzbar ist. Im Sekundärkreislauf 6, der somit als Kühlkreislauf wirkt, können weitere nicht dargestellte Verbraucher angeordnet sein, die ebenfalls durch den Kühlmittelstrom gekühlt werden. Das Kühlelement 5 gibt die vom Kühlmittel aufgenommene Wärme an den Verdampfer bzw. das Kältemittel ab, d. h. der Verdampfer 1 wirkt als Wärmesenke für den Kühlkreislauf 6. Die primäre Funktion des Verdampfers, Luft für den Fahrzeuginnenraum zu kühlen, wird durch den Anschluss des Sekundärkreislaufes 6 nicht beeinträchtigt, es erfolgt auch kein Eingriff in den Kältemittelkreislauf 2.

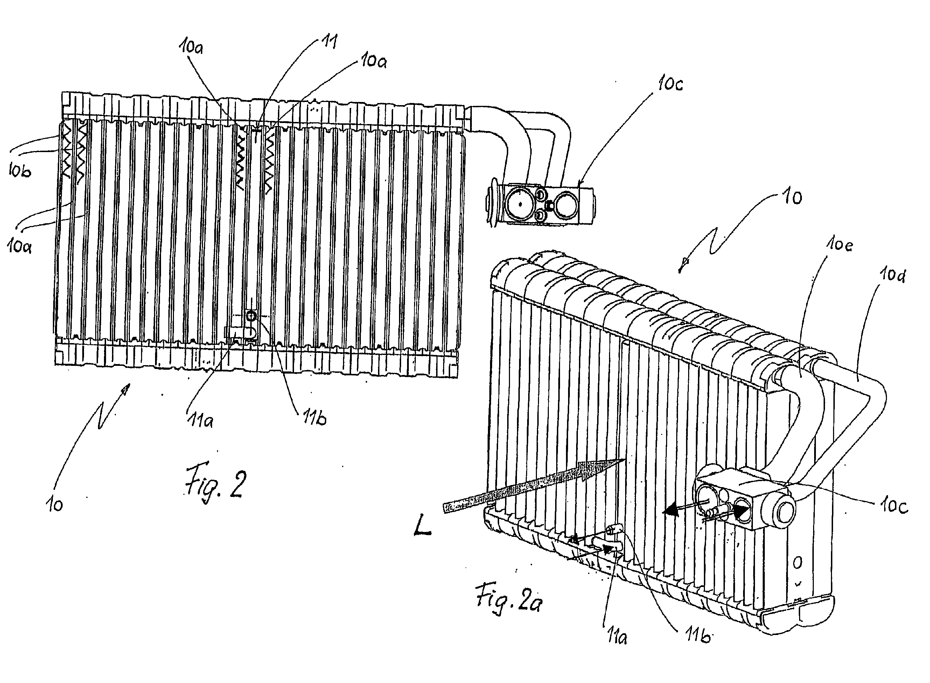

**Fig. 2** und Fig. **2a** zeigen einen Flachrohrverdampfer 10 in einer Ansicht von vom sowie in einer 3-D-Darstellung. Der Verdampfer 10 weist Flachrohre 10a auf, zwischen denen Wellrippen 10b, welche von Umgebungsluft beaufschlagt werden, angeordnet sind. Im mittleren Bereich des Verdampfers 10 ist zwischen zwei Flachrohren 10a ein Kühlelement 11 angeordnet, welches wärmeleitend mit den Flachrohren 10a verbunden ist, vorzugsweise durch Lötung. Das Kühlelement 11 weist in seinem (in der Zeichnung) unten liegenden Bereich einen Eintrittsstutzen 11 a und einen Austrittsstutzen 11 b für einen Anschluss an den hier nicht dargestellten Sekundär- oder Kühlmittelkreislauf (vgl. Sekundärkreislauf 6 in Fig. 1) auf. Der Flachrohrverdampfer 10 weist einen Kältemittelanschlussflansch 10c auf, welcher einerseits mit einem nicht dargestellten Kältemittelkreislauf der Kraftfahrzeug-Klimaanlage und andererseits über Anschlussrohre 10d, 10e mit dem Verdampfer 10 bzw. dessen Sammelkästen verbunden ist. Der Verdampfer 10 wird in Richtung des Pfeils L von Luft durchströmt, die im Verdampfer abgekühlt und einem nicht dargestellten Fahrgastraum des Kraftfahrzeuges zugeführt wird.

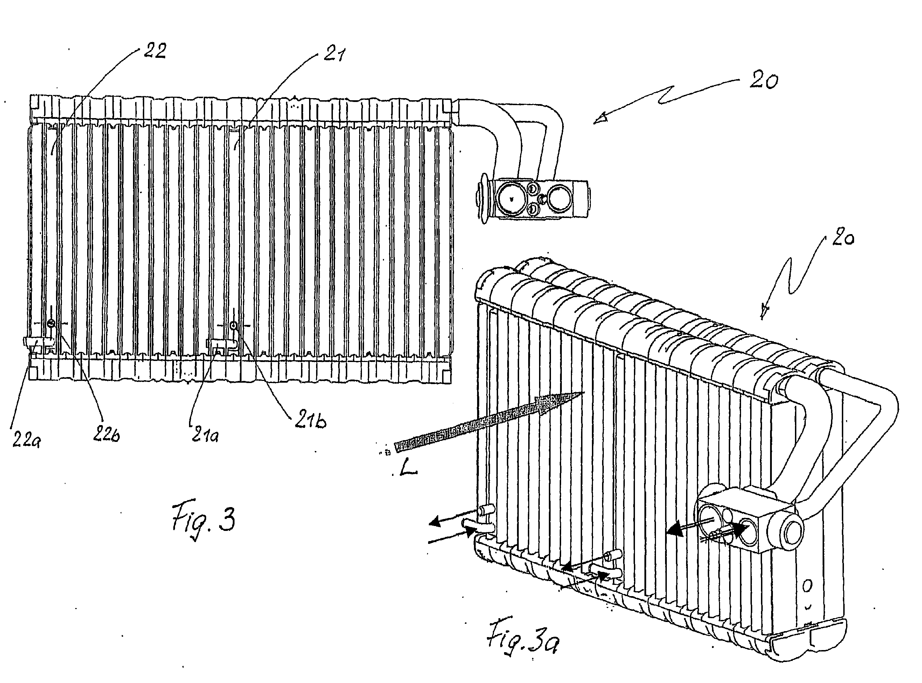

**Fig. 3** und **3a** zeigen ein weiteres Ausführungsbeispiel der Erfindung in Form eines Flachrohrverdampfers 20, in einer Ansicht von vorn und in einer perspektivischen Darstellung. Der Aufbau des Flachrohrverdampfers 20 entspricht im Wesentlichen dem Aufbau des Verdampfers gemäß Fig. 2 und 2a mit dem Unterschied, dass hier zwei Kühlelemente 21, 22 in den Verdampferblock, d. h. jeweils zwischen zwei benachbarte Flachrohre integriert sind. Die Kühlelemente 21, 22 entsprechen in ihrem Aufbau dem Kühlelement 11 gemäß Fig. 2, 2a, d. h. sie weisen ebenfalls Anschlussstutzen 21 a, 21 b sowie 22a, 22b auf. Beide Kühlelemente 21, 22 sind ebenfalls an den hier nicht dargestellten Sekundärkreislauf angeschlossen. Durch die Vervielfachung der Kühlelemente wird die Kühlkapazität des Sekundärkreislaufes entsprechend erhöht - allerdings auf Kosten der sekundärseitigen Wärmeaustauschfläche (Wellrippen) des Verdampfers.

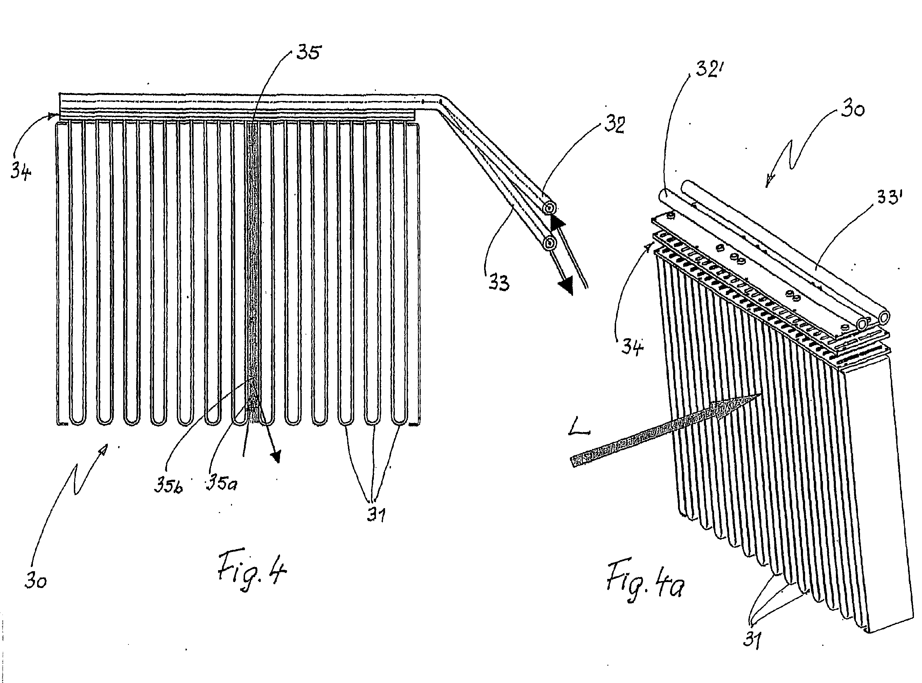

**Fig. 4** und **4a** zeigen ein weiteres Ausführungsbeispiel der Erfindung in Form eines Verdampfers 30, in einer Ansicht von vorn und in einer 3-D-Darstellung. Der Verdampfer 30 entspricht im Wesentlichen auch dem Stand der Technik und wird mit einem alternativen Kältemittel, CO2 bzw. R744, betrieben, was eine druckfeste Ausführung für die einzelnen Verdampferkomponente bedeutet. Der Verdampfer 30 weist U-förmig oder serpentinenförmig angeordnete Flachrohre 31 (vorzugsweise Mehrkammerrohre) auf, zwischen denen hier nicht dargestellte Wellrippen angeordnet sind. Der Verdampfer 30 ist über Anschlussrohre 32, 33 mit einem nicht dargestellten CO2-Kältekreislauf einer Kraftfahrzeug-Klimaanlage verbunden, wobei die Anschlussrohre 32, 33 jeweils in ein Verteiler- bzw. Sammelrohr 32', 33' übergehen. Die Verteilung des Kältemittels erfolgt in einem Sammelkasten 34, der in Fig. 4a in einer Explosivdarstellung dargestellt ist. Auch dieser Verdampfertyp ist aus dem Stand der Technik, beispielsweise der DE 102 60 030 A1 der Anmelderin bekannt. Andere Bauformen für mit CO2 betriebene Verdampfer wurden durch die DE 100 25 362 A1 bekannt. In den Verdampfer 30 ist etwa im mittleren Bereich ein Kühlelement 35 integriert und zwischen zwei benachbarten Flachrohren 31 angeordnet, d. h. vorzugsweise mit den benachbarten Flachrohren verlötet. Das Kühlelement 35 weist in seinem unteren Bereich Anschlussstutzen 35a, 35b für den Anschluss an den oben erwähnten Sekundärkreislauf zur Kühlung von Wärme abgebenden Verbrauchern auf.

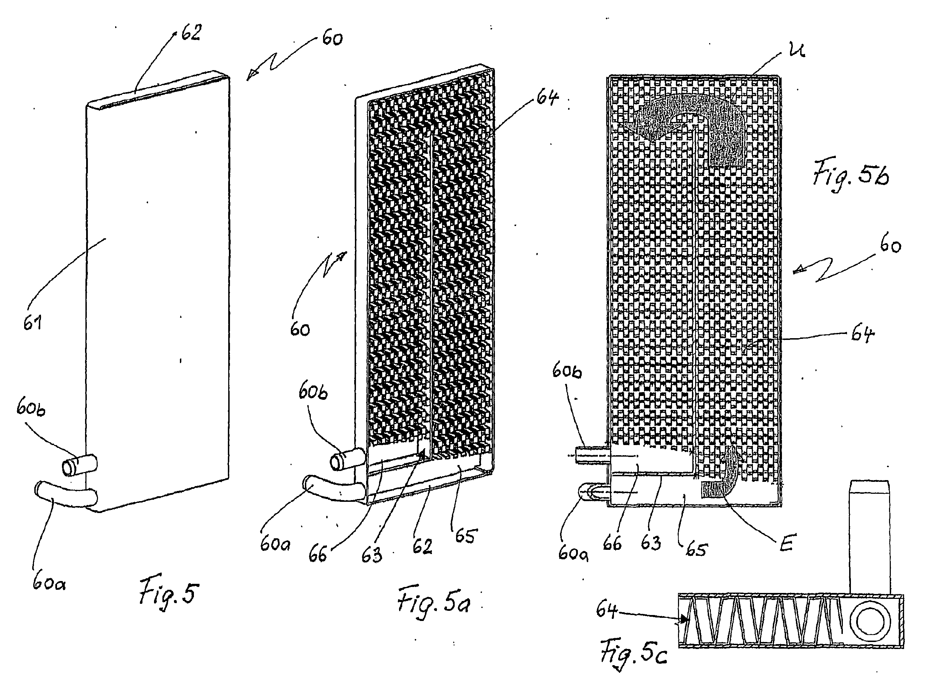

Die Figuren **5, 5a, 5b, 5c** zeigen ein Kühlelement 60 als Einzelteil, welches den oben genannten Kühlelementen 5, 11, 21, 22, 35 entspricht. Ebenso wie die oben erwähnten Verdampfer besteht auch das Kühlelement 60 aus Aluminiumwerkstoffen und ist somit mit dem Verdampfer verlötbar. Das Kühlelement 60 ist als Rechteckrohr 61 ausgebildet, in welches ein Halterahmen 62 eingeschoben ist, der das Rohr 61 stirnseitig verschließt. An der Schmalseite des Rechteckrohres 60 sind die beiden Anschlussstutzen 60a, 60b angeordnet. Fig. 5a zeigt das Innere des Rechtreckrohres 60, wobei zwischen Kühlmitteleinlass 60a und Kühlmittelauslass 60b eine winklig ausgebildete Trennwand 63 angeordnet ist. Zwischen den beiden Anschlussstutzen 60a, 60b ergibt sich somit ein etwa U-förmiger Strömungskanal, d. h. das Kühlelement 60 wird zweiflutig durchströmt. Strömungspfeile E für den Eintritt des Kühlmittels und U für die Umlenkung des Kühlmittels sind in Fig. 5c dargestellt. Der U-förmige Strömungskanal ist durch ein Turbulenzblech 64 ausgefüllt, welches in Fig. 5c im Querschnitt dargestellt ist. Es kann mit dem Rechteckrohr 60 verlötet werden. Im Bereich der Ein- und Austrittsstutzen 60a, 60b sind Freiräume 65, 66, d. h. ohne Belegung mit dem Turbulenzblech ausgespart, und zwar für eine Verteilung bzw. Sammlung des Kühlmittels. Das Kühlmittel ist vorzugsweise ein flüssiger Wärmeträger, insbesondere ein Wasser-Glysantin-Gemisch.

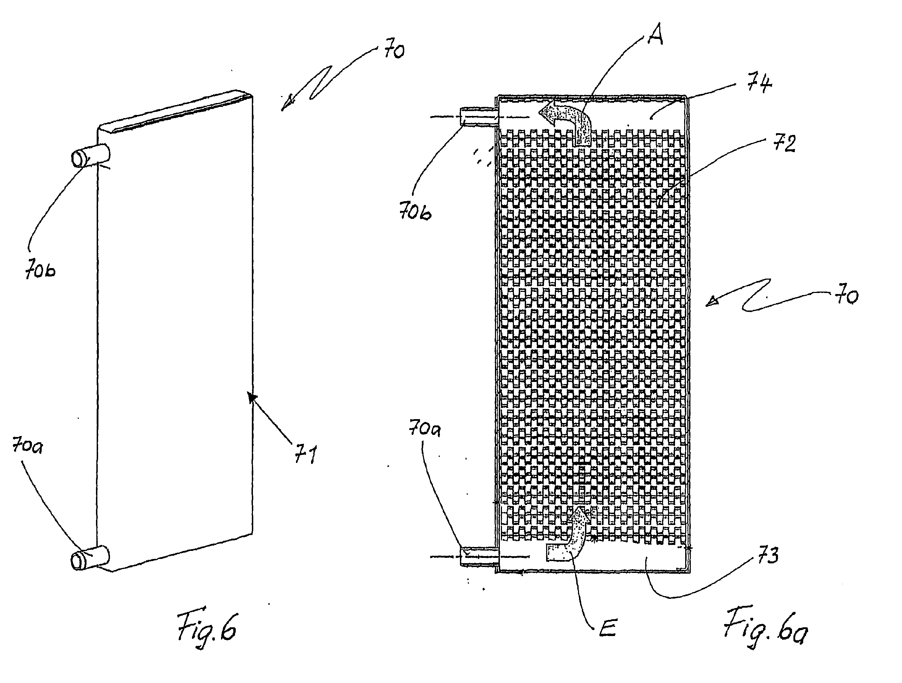

**Fig. 6** und **6a** zeigen ein weiteres Ausführungsbeispiel für ein Kühlelement 70, welches einflutig durchströmbar ist. Das Kühlelement 70 ist ebenfalls als Rechteckrohr 71 ausgebildet und weist in seinem unteren Bereich an der Schmalseite einen Einlassstutzen 70a und auf der gleichen Seite in seinem oberen Bereich einen Auslassstutzen 70b zum Anschluss an den hier nicht dargestellten Sekundärkreislauf auf. In Fig. 6a ist das Innere, d. h. der Strömungsweg des Kühlmittels durch das Kühlelement 70 dargestellt, und zwar durch einen eintrittsseitigen Strömungspfeil E und einen austrittsseitigen Strömungspfeil A. Zwischen Ein- und Auslassstutzen 70a, 70b ist ein Turbulenzblech 72 angeordnet, welches innerhalb des Kühlelementes 70 Freiräume 73, 74 für die Verteilung und Sammlung des Kühlmittels belässt. Durch das Turbulenzblech 72 wird der Wärmeübergang vom Kühlmittel auf das Rechteckrohr und damit auch auf das Kältemittel verbessert. Verglichen mit dem Ausführungsbeispiel gemäß Fig. 5 bis 5c mit zweiflutiger Durchströmung ergibt sich für die einflutige Durchströmung ein geringerer kühlmittelseitiger Druckabfall, allerdings auch eine geringere Kühlleistung. Anstelle des Turbulenzbleches 72 sind auch andere den Wärmeübergang erhöhende Mittel möglich, z. B. eine einfache Innenberippung.

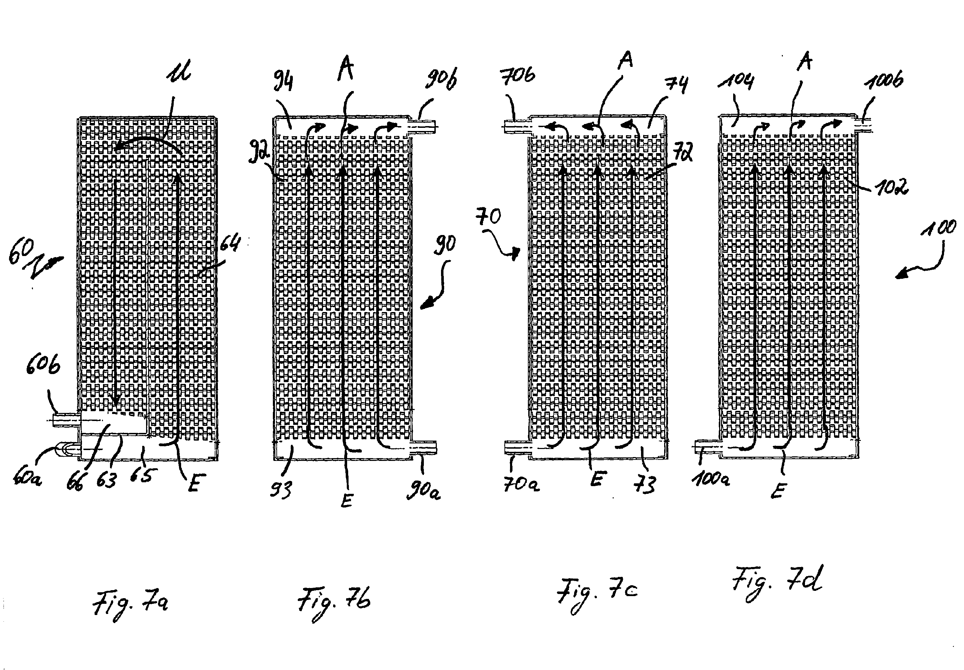

**Fig. 7a, 7b, 7c, 7d** zeigen weitere Ausführungsbeispiele für ein Kühlelement. Gleiche Merkmale sind mit den gleichen Bezugszeichen wie in den vorhergehenden Figuren bezeichnet.

Fig. 7a entspricht der Figur 5b.

Fig. 7b zeigt ein weiteres Ausführungsbeispiel für ein Kühlelement 90, welches einflutig durchströmbar ist. Das Kühlelement 90 ist ebenfalls als Rechteckrohr ausgebildet und weist in seinem unteren Bereich an der Schmalseite einen Einlassstutzen 90a und in seinem oberen Bereich einen Auslassstutzen 90b zum Anschluss an den hier nicht dargestellten Sekundärkreislauf auf. Das Innere, d. h. der Strömungsweg des Kühlmittels durch das Kühlelement 90 dargestellt, und zwar durch eintrittsseitige Strömungspfeile E und austrittsseitige Strömungspfeil A. Zwischen Ein- und Auslassstutzen 90a, 90b ist ein Turbulenzblech 92 angeordnet, welches innerhalb des Kühlelementes 90 Freiräume die Verteilung und Sammlung des Kühlmittels belässt. Durch das Turbulenzblech 92 wird der Wärmeübergang vom Kühlmittel auf das Rechteckrohr und damit auch auf das Kältemittel verbessert. Im Vergleich zu Figur 5b sind Ein- und Auslassstutzen 90a, 90b auf der gegenüberliegenden Seite angeordnet.

Fig. 7c entspricht Figur 6a.

Fig. 7d zeigt ein weiteres Ausführungsbeispiel für ein Kühlelement 100, welches einflutig durchströmbar ist. Das Kühlelement 100 ist ebenfalls als Rechteckrohr ausgebildet und weist in seinem unteren Bereich an der Schmalseite einen Einlassstutzen 100a und im Unterschied zu Figur 6 und Figur 7c auf der gegenüberliegenden anderen Seite des Kühlelements 100 in seinem oberen Bereich einen Auslassstutzen 100b zum Anschluss an den hier nicht dargestellten Sekundärkreislauf auf.

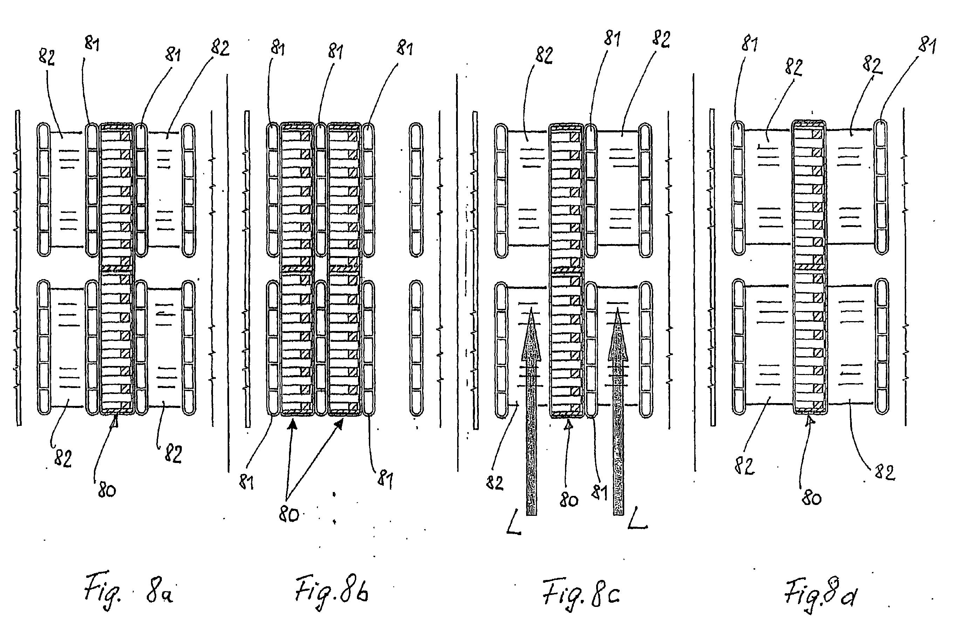

**Fig. 8a, 8b, 8c, 8d****,** zeigen verschiedene Möglichkeiten der Anordnung bzw. Integration von Kühlelementen in einen Verdampfer. Gleiche Merkmale sind mit den gleichen Bezugszeichen wie in den vorhergehenden Figuren bezeichnet.

In Fig. 8a ist ein Kühlelement 80 zwischen benachbarten Flachrohren 81 eines zweireihigen Flachrohrverdampfers angeordnet. Die Wände des Kühlelementes 80 liegen also direkt an den Flachrohren 81 an und sind vorzugsweise mit diesen verlötet, wodurch sich ein hervorragender Wärmedurchgang ergibt. Die vom Kühlmittel im Kühlelement 80 abgegebene Wärme fließt also direkt in die Flachrohre 81, in denen das Kältemittel strömt. Auf den dem Kühlelement 80 abgewandten Seiten der Flachrohre 81 sind Wellrippen 82 angeordnet, die ebenfalls mit den Flachrohren 81 verlötet sind.

Fig. 8b zeigt ein weiteres Ausführungsbeispiel, und zwar zwei Kühlelemente 80, die jeweils zwischen benachbarten Flachrohren 81 angeordnet sind. Die beiden Kühlelemente 80 geben ihre Wärme also einerseits an die mittleren und andererseits an die beiden äußeren Flachrohre 81 ab.

Fig. 8c zeigt eine weitere asymmetrische Anordnung, wobei das Kühlelement 80 einerseits, d. h. mit einer Breitseite an den Flachrohren 81 und andererseits, d. h. mit der anderen Breitseite an Wellrippen 82 anliegt. Alle Teile sind miteinander verlötet, so dass die Wärme aus dem Kühlelement 80 einerseits in die Flachrohre 81 und andererseits über die Wellrippen 82 an die darüber streichende Luft, dargestellt durch Pfeile L, abgegeben wird.

Fig. 8d zeigt ein weiteres Ausführungsbeispiel, wobei das Kühlelement 80 direkt zwischen benachbarten Wellrippen 82 angeordnet ist, die andererseits mit Flachrohren 81 in wärmeleitendem Kontakt stehen. Die vom Kühlelement 80 abgegebene Wärme fließt also direkt durch Wärmeleitung in die Wellrippen 82 und wird beiderseits an die über die Wellrippen 82 strömende Umgebungsluft abgegeben.

## Patentansprüche

1. Verdampfer, insbesondere für eine Klimaanlage eines Kraftfahfzeuges, mit Strömungskanälen für ein Kältemittel und außerhalb der Strömungskanäle angeordneten, von Luft beaufschlagbaren Rippen, wobei mindestens ein von einem Kühlmittel durchströmbares Kühlelement (5, 11, 21, 210, 510, 520, 710) wärmeleitend mit dem Verdampfer (1, 10, 20, 270, 570, 770) verbunden ist und wobei das mindestens eine Kühlelement (5, 11, 21, 22, 35, 80) zwischen zwei benachbarten Flachrohren (10a, 81) bzw. Scheiben- oder Platten angeordnet ist und **dadurch gekennzeichnet, dass**:
das mindestens eine Kühlelement (5, 11, 21, 22, 35, 80, 210, 510, 520, 710, 910) mit mindestens einem Strömungskanal (10a, 31, 81, 220), stoffschlüssig, insbesondere durch Löten Schwelßen, Kleben usw. oder formschlüssig insbesondere durch Clipsen, Schrauben usw., verbunden ist.

2. Verdampfer nach Anspruch 1, **dadurch gekennzeichnet, dass** der Verdampfer als Flachrohrverdampfer (10, 20, 30, 270, 570, 770) mit Flachrohren (10a, 31, 81, 220, 230) und Wellrippen (10b, 82) ausgebildet ist.

3. Verdampfer nach Anspruch 1, **dadurch gekennzeichnet, dass** der Verdampfer als Platten- oder Scheibenverdampfer ausgebildet ist.

4. Verdampfer nach Anspruch 1, 2 oder 3, **dadurch gekennzeichnet, dass** das Kältemittel R134a oder R152 ist.

5. Verdampfer nach Anspruch 1, 2 oder 3, **dadurch gekennzeichnet, dass** das Kältemittel R744 (Kohlendioxid) ist.

6. Verdampfer nach mindestens einem der Ansprüche 1 bis 5, **dadurch gekennzeichnet, dass** das Kühlelement (5, 11, 21, 22, 35, 60, 70, 80) kühlmittelseitig mit einem separaten Kühlkreislauf (Sekundärkreislauf 6) verbunden ist.

7. Verdampfer nach Anspruch 6, **dadurch gekennzeichnet, dass** der Sekundärkreislauf (6) der Kühlung von Wärme abgebenden Verbrauchern, insbesondere von elektronischen Bauelementen dient.

8. Verdampfer nach mindestens einem der Ansprüche 1 bis 7, dadurch gekennzeichet, dass das Kühlmittel im Sekundärkreislauf (6) ein Gemisch aus Wasser und Glysantln ist.

9. Verdampfer nach mindestens einem der Ansprüche 1 bis 8, da**durch gekenntzeichnet,** dass das mindestens eine Kühlelement (5, 11, 21, 22, 35, 60, 70, 80, 210, 510, 520, 710, 910) als Rechteckrohr (61, 71) ausgebildet und zwischen benachbarten Strömungskanälen (81) angeordnet ist.

10. Verdampfer nach mindestens einem der Ansprüche 1 bis 9, **dadurch gekennzeichnet, dass** das mindestens eine Kühlelement (80) mit beiden Breitseiten an den Strömungskanälen (81) anliegt.

11. Verdampfer nach mindestens einem der Ansprüche 1 bis 9, **dadurch gekennzeichnet, dass** das mindestens eine Kühlelement (80) zwischen einem Strömungskanal (81) und einer Wellrippe (82) angeordnet ist.

12. Verdampfer nach mindestens einem der Ansprüche 1 bis 9, **dadurch gekennzeichnet, dass** das mindestens eine Kühlelement (80) zwischen zwei benachbarten Wellrippen (82) angeordnet ist.

13. Verdampfer nach mindestens einem der Ansprüche 1 bis 12, **dadurch gekennzeichnet, dass** das mindestens eine Kühlelement (70) einflutig vom Kühlmittel durchströmbar ist.

14. Verdampfer nach mindestens einem der Ansprüche 1 bis 13, **dadurch gekennzeichnet, dass** das Kühlelement (69) zweiflutig (mit Umlenkung U) durchströmbar Ist

15. Verdampfer nach mindestens einem der Ansprüche 1 bis 14, **dadurch gekennzeichnet, dass** das mindestens eine Kühlelement (60, 70) einen Eintritts- und einen Austrittsstutzen (60a, 60b, 70a" 70b) für das

16. Verdampfer nach mindestens einem der Ansprüche 1 bis 15, **dadurch gekennzeichnet, dass** im Inneren des Kühlelementes (60, 70) Turbulenzeinlagen (64, 72) angeordnet sind.

17. Verdampfer nach einem der Ansprüche 1 bis 16, **dadurch gekennzeichnet, dass** mindestens ein Kühlelement (210, 410, 520, 710, 910) mit mindestens einem äußeren Flachrohr (220) stoffschlüssig Insbesondere durch Löten, Schweißen, Kleben usw, und/oder insbesondeformschlüssig durch Clipsen, Schrauben usw. verbunden ist.

18. Verdampfer nach einem der Ansprüche 1 bis 17, **dadurch gekennzeichnet, dass** mindestens ein erstes Kühlelement (510) und mindestens ein zweites Kühlelement (520) in Reihe durchströmbar sind.

19. Verdampfer nach einem der Ansprüche 1 bis 17, **dadurch gekennzeichnet, dass** mindestens ein erstes Kühlelement (710) und mindestens ein zweites Kühlelement (710) parallel durchströmbar sind.

20. Verdampfer nach einem der Ansprüche 1 bis 19, **dadurch gekennzeichnet, dass** eine Breite (390) des mindestens einen Kühlelements (210, 510, 520, 710, 910) unabhängig von mindestens einem Rastermaße mindestens eines Rohres, insbesondere Flachrohres, und/oder mindestens einer Rippe, insbesondere Wellrippe, ist

21. Verdampfer nach einem der Ansprüche 1 bis 19, **dadurch gekennzeichnet, dass** eine Breite (390) des mindestens einen Kühlelements (210, 510, 520, 710, 910) abhängig von mindestens einem Rastermaße mindestens eines Rohres, insbesondere Flachrohres, und/oder mindestens einer Rippe, insbesondere Wellrippe, ist.

22. Kühlvorrichtung zur Kühlung von Wärme abgebenden Verbrauchern, insbesondere in einem Kraftfahrzeug, **gekennzeichnet durch** die wärmeleitende Verbindung mindestens eines von einem Kühlmittel durchströmbaren Kühlelementes mit einem Verdampfer, insbesondere einer Kraftfahrzeug-Klimaanlage und den Anschluss eines von dem Kühlmittel durchströmbaren Sekundärkreislaufes an das mindestens eine Kühlelement mit einem Verdampfer nach einem der vorhergehenden Ansprüche 1 bis 21

23. Kühlvorrichtung nach Anspruch 22, **dadurch gekennzeichnet, dass** der Sekundärkreislauf (113) alternativ an einen Kühlkreislauf (115) einer Brennkraftmaschine eines Kraftfahrzeuges anschließbar ist.

24. Kühlvorrichtung nach Anspruch 23, **dadurch gekennzeichnet, dass** der Sekundärkreislauf (113) an einen im Kühlkreislauf (115) angeordneten, luftgekühlten Heizkörper (114) anschließbar ist.

25. Kühlvorrichtung nach Anspruch 24, **dadurch gekennzeichnet, dass** der Heizkörper (114) anstelle des mindestens einen Kühlelementes zuschaltbar ist

26. Kühlvorrichtung nach Anspruch 23, 24 oder 25 **dadurch gekennzeichnet, dass** im Sekundärkreislauf (113) Mehrwegeventile angeordnet sind, über welche das mindestens eine Kühlelement abschaltbar und der Heizkörper (114) zuschaltbar ist.

27. Kühlvorrichtung nach Anspruch 22, **dadurch gekennzeichnet, dass** der Heizkörper (114) über Verbindungsleitungen (116, 117), welche mit den Mehrwegeventilen verbunden sind, zuschaltbar ist.

28. Kühlvorrichtung nach Anspruch 26 oder 27 **dadurch gekennzeichnet, dass** die Mehrwegeventile elektrisch oder thermostatisch, ansteuerbar sind.

29. Kühlvorrichtung nach einem der Ansprüche 23 bis 28 **dadurch gekennzeichnet, dass** der Sekundärkreislauf (113) einen Vorlauf (113a) und einen Rücklauf (113b) aufweist und dass zwischen Vor- und Rücklauf (113a, 113b) eine steuerbare Kurzschlussleitung (118) angeordnet ist.

## Claims

1. Evaporator, especially for an air-conditioning system of a motor vehicle with flow channels for a refrigerant and with fins, arranged outside of the flow channels and that can be impinged upon by air, wherein at least one cooling element (5, 11, 21, 210, 510, 520, 710) that can carry a coolant flow is connected in a heat conducive way to the evaporator (1, 10, 20, 270, 570, 770), and wherein the at least one cooling element (5, 11, 21, 22, 35, 80) is arranged between two adjacent flat tubes (10a., 81) or trays or plates, and **characterized in that** the at least one cooling element (5, 11, 21, 22, 35, 80, 210, 510, 520, 710, 910) is connected to at least one flow channel (10a, 31, 81, 220) with a material fit, especially through soldering, wielding, adhesion, etc., or with a positive fit through clips, screws, etc.

2. Evaporator according to claim 1, **characterized in that** the evaporator is constructed as a flat tube evaporator (10, 20, 30, 270, 570, 770) with flat tubes (10a, 31, 81, 220, 230) and corrugated fins (10b, 82).

3. Evaporator according to claim 1, **characterized in that** the evaporator is constructed as a plate or tray evaporator.

4. Evaporator according to claim 1, 2, or 3, **characterized in that** the refrigerant is R134a or R152.

5. Evaporator according to claim 1, 2, or 3, **characterized in that** the refrigerant is R744 (carboy dioxide.

6. Evaporator according to at least one of claims 1 to 5, **characterized in that** the cooling element (5, 11, 21, 22, 35, 60, 70, 80) is connected on the coolant side to a separate cooling circuit (secondary circuit 6).

7. Evaporator according to claim 6, **characterized in that** the secondary circuit (6) is used for cooling loads generating heat, especially electronic components.

8. Evaporator according to at least one of claims 1 to 7, **characterized in that** the coolant in the secondary circuit (6) is a mixture of waiter and Glysantin.

9. Evaporator according to at least one of claims 1 to 8, **characterized in that** the at least one cooling element (5, 11, 21, 22, 35, 60, 70, 80, 210, 510, 520, 710, 910) is constructed as a rectangular tube (61, 71) and is arranged between adjacent flow channels (81).

10. Evaporator according to at least one of claims 1 to 9, **characterized in that** the at least one cooling element (80) contacts the flow charnels (81) with both broad sides.

11. Evaporator according to at least one of claims 1 to 9, **characterized in that** the at least one cooling element (80) is arranged between a flow channel (81) and a corrugated fin (82).

12. Evaporator according to at least one of claims 1 to 9, **characterized in that** the at least one cooling element (80) is arranged between two adjacent corrugated fins (82).

13. Evaporator according to at least one of claims 1 to 12, **characterized in that** the at least one cooling element (70) can carry a single flow of coolant.

14. Evaporator according to at least one of claims 1 so 13, **characterized in that** the cooling element (69) can carry a double flow (with reversal U).

15. Evaporator according to at least one of claims 1 to 14, **characterized in that** the at least one cooling element (60, 70) has an inlet and an outlet port (60a, 60b, 70a, 70b) for the coolant.

16. Evaporator according to at least one of claims 1 to 15, **characterized in that** turbulence inserts (64, 72) are arranged in the interior of the cooling element (60, 70).

17. Evaporator according to one of claims 1 to 16, **characterized in that** at least one cooling element (210, 410, 520, 710, 910) is connected to at least one outer flat tube (220) with a material fit, especially though soldering, welding, adhesion, etc., and/or especially with a positive fit trough clips, screws, etc.

18. Evaporator according to one of claims 1 to 17, **characterized in that** at least one first cooling element (510) and at least one second cooling element (520) can carry a flow in series.

19. Evaporator according to one of claims 1 to 17, **characterized in that** at least one first cooling element (710) and at least one second cooling element (710) can carry a flow in parallel.

20. Evaporator according to one of claims 1 to 19, **characterized in that** a width (390) of the at least one cooling element (210, 510, 520, 710, 910) is independent of at least one modular dimension of at least one tube, especially a flat tube, and/or at least one fin, especially a corrugated fin.

21. Evaporator according to one of claims 1 to 19, **characterized in that** a with (390) of the at least one cooling element (210, 510, 520, 710, 910) is dependent on at least one modular dimension of at least one tube, especially a flat tube, and/or at least one fin, especially a corrugated fin.

22. Cooling device for cooling loads generating heat, especially in a motor vehicle, **characterized by** the heatconductive connection of at least one cooling element that can carry a coolant flow to an evaporator, especially of a motor vehicle air-conditioning system, and the connection of a secondary circuit that can carry a flow of coolant to the at least one cooling element, haying an Evaporator according to one of preceding Claims 1 to 21.

23. Cooling device according to claim 22, **characterized in that** the secondary circuit (113) can be connected alternatively to a cooling circuit (115) of an internal combustion engine of a motor vehicle.

24. Cooling device according to claim 23, **characterized in that** the secondary circuit (113) can be connected to an air-cooled radiator (114) arranged in the cooling circuit (115).

25. Cooling device according to claim 24, **characterized in that** the radiator (114) can be connected instead of the at least one cooling element.

26. Cooling device according to claim 23, 24, or 25, **characterized in that** multi-port valves, by means of which the at least one cooling element can be disconnected and the radiator (114) can be connected, are arranged in the secondary circuit (113).

27. Coaling device according to claim 22, **characterized in that** the radiator (114) can be connected to via connection lines (116, 117) that connect to the multi-port valves.

28. Cooling device according to claim 26 or 27, **characterized in that** the multi-port valves can be controlled electrically or thermostatically.

29. Cooling device according to one of claims 23 to 28, **characterized in that** the secondary circuit (113) has a feed line (113a) and a return line (113b) and that a controllable short-circuit line (118) is arranged between the feed line and return line (113a, 113b).

## Revendications

1. Evaporateur, en particulier pour un système de climatisation d'un véhicule automobile, comprenant des conduits d'écoulement pour un fluide frigorigène et des ailettes disposées à l'extérieur des conduits d'écoulement et pouvant être alimentées par de l'air, où au moins un élément de refroidissement (5, 11, 21, 210, 510, 520, 710) pouvant être traversé par un liquide de refroidissement est assemblé avec l'évaporateur (1, 10, 20, 270, 570, 770), de façon thermoconductrice, et où l'élément de refroidissement (5, 11, 21, 22, 35, 80) au moins au nombre de un est disposé entre deux tubes plats voisins (10a, 81), ou bien des disques ou des plaques, **caractérisé en ce que** l'élément de refroidissement (5, 11, 21., 22, 35, 80, 210, 510, 520, 710, 910) au moins au nombre de un est assemblé, par continuité de manière, avec au moins un conduit d'écoulement (10a, 31, 81, 220) en particulier par brasage, soulage, collage, etc., ou bien par complémentarité de forme, en particulier par clipsage, vissage, etc.

2. Evaporateur selon la revendication 1, **caractérisé en ce que** l'évaporateur est conçu comme un évaporateur à tubes plats (10, 20, 30, 270, 570, 770) comprenant des tubes plats (10a, 31, 81, 220, 230) et des ailettes ondulées (10b, 82).

3. Evaporateur selon la revendication 1, **caractérisé en ce que** l'évaporateur est conçu comme un évaporateur à plaques ou à disques.

4. Evaporateur selon la revendication 1, 2 ou 3, **caractérisé en ce que** le fluide frigorigène est du R134a ou du R152.

5. Evaporateur selon la revendication 1, 2 ou 3, **caractérisé en ce que** le fluide frigorigène est du R744 (dioxyde de carbone).

6. Evaporateur selon au moins l'une quelconque des revendications 1 à 5, **caractérisé en ce que** l'élément de refroidissement (5, 11, 21, 22, 35, 60, 70, 80) est raccordé, côté liquide de refroidissement, à un circuit de refroidissement séparé (circuit secondaire 6).

7. Evaporateur selon la revendication 6, **caractérisé en ce que** le circuit secondaire (6) sert au refroidissement de récepteurs dissipant de la chaleur, en particulier au refroidissement de composants électroniques.

8. Evaporateur selon au moins l'une quelconque des revendications 1 à 7, **caractérisé en ce que** le liquide de refroidissement est, dans le circuit secondaire (6), un mélangé d'eau et de *Glysantin.*

9. Evaporateur selon au moins l'une quelconque des revendications 1 à 8. **caractérisé en ce que** l'élément de refroidissement (5, 11, 21, 22, 35, 60, 70, 80, 210, 510, 520, 710, 910) au moins au nombre de un est conçu comme un tube rectangulaire (61, 71) et disposé entre des conduits d'écoulement voisins (81).

10. Evaporateur selon au moins l'une quelconque des revendications 1 à 9, **caractérisé en ce que** l'élément de refroidissement (80) au moins au nombre de un est en appui, par deux côtés larges, sur les conduits d'écoulement (81).

11. Evaporateur selon au moins l'une quelconque des revendications 1 à 9, **caractérisé en ce que** l'élément de refroidissement (80) au moins au nombre de un est disposé entre un conduit d'écoulement (81) et une ailette ondulés (82).

12. Evaporateur selon au moins l'une quelconque des revendications 1 à 9, **caractérisé en ce que** l'élément de refroidissement (80) au moins au nombre de un est disposé entre deux aiglettes voisines (82).

13. Evaporateur selon au moins l'une quelconque des revendications 1 à 12, **caractérisé en ce que** l'élément de refroidissement (70) au moins au nombre de un peut être traversé par le liquide de refroidissement circulant à un seul flux.

14. Evaporateur selon au moins l'une quelconque des revendications 1 à 13, **caractérisé en ce que** l'élément de refroidissement (69) peut être traversé par deux flux (retour de flux en U).

15. Evaporateur selon au moins l'une quelconque des revendications 1 à 14, **caractérisé en ce que** l'élément de refroidissement (60, 70) au moins au nombre de un présente une tubulure d'entrée et une tubulure de sortie (60a, 60b, 70a, 70b) pour le liquide de refroidissement.

16. Evaporateur selon au moins l'une quelconque des revendications 1 à 15, **caractérisé en ce que** des générateurs de turbulences (64, 72) sont disposés à l'intérieur de l'élément de refroidissement (60, 70).

17. Evaporateur selon l'une quelconque des revendications 1 à 16, **caractérisé en ce qu'**au moins un élément de refroidissement (210, 410, 620, 710, 910) est assemblé, par continuité de matière, avec au moins un tube plat extérieur (220), en particulier par brassage, soudage, coulage, etc., et / ou en particulier assemble par complémentarité de forme, en procédant par clipsage, vissage, etc.

18. Evaporateur selon l'une quelconque des revendications 1 à 17, **caractérisé en ce qu'**au moins un premier élément de refroidissement (510) et au moins un deuxième élément de refroidissement (520) peuvent être traversés en série.

19. Evaporateur selon l'une quelconque des revendications 1 à 17, **caractérisé en ce qu'**au moins un premier élément de refroidissement (710) et au moins un deuxième élément de refroidissement (710) peuvent être traversés de façon parallèle.

20. Evaporateur selon l'une quelconque des revendications 1 à 19, **caractérisé en ce qu'**une largeur (390) de l'élément de refroidissement (210, 510, 520, 710, 910) au moins au nombre de un est indépendante d'au moins une dimension modulaire d'au moins un tube, en particulier d'un tube plat, et / ou d'au moins une ailette, en particulier d'une ailette ondulée.

21. Evaporateur selon l'une quelconque des revendications 1 à 19, **caractérisé en ce qu'**une largueur (390) de l'élément de refroidissement (210, 510, 520, 710, 910) au moins au nombre de un est dépendante d'au moins une dimension modulaire d'au moins un tube, en particulier d'un tube plat, est / ou d'au moins une ailette, en particulier d'une aiglette ondulée.

22. Dispositif de refroidissement servant au refroidissement de récepteurs dissipant de la chaleur, en particulier dans un véhicule automobile, **caractérisé par** l'assemblage thermoconducteur d'au moins un élément de refroidissement pouvant être traversé par un liquide de refroidissement, avec une évaporateur, en particulier d'un système de climatisation d'un véhicule automobile, et **caractérisé par** le raccordement d'un circuit secondaire pouvant être traversé par le liquide de refroidissement, à l'élément de refroidissement au moins au nombre de un, dispositif de refroidissement comprenant un évaporateur selon l'une quelconque des revendications précédentes 1 à 21.

23. Dispositif de refroidissement selon la revendication 22, **caractérisé en ce que** le circuit secondaire (113) peut être raccordé, alternativement, à un circuit de refroidissement (115) d'un moteur à combustion interne d'un véhicule automobile.

24. Dispositif de refroidissement selon la revendication 23, **caractérisé en ce que** le circuit secondaire (113) peut être raccordé à un radiateur (114) à refroidissement à air et disposé dans le circuit de refroidissement (115).

25. Dispositif de refroidissement selon la revendication 24, **caractérisé en ce que** le radiateur (114) peut être mis en circuit à la place de l'élément de refroidissement au moins au nombre de un.

26. Dispositif de refroidissement selon la revendication 23, 24 ou 25, **caractérisé en ce que** des vannes à plusieurs voies, par lesquelles peut être mis hors circuit l'élément de refroidissement au moins au nombre de un et qui mettent en circuit le radiateur (114), sont disposées dans le circuit secondaire (113).

27. Dispositif de refroidissement selon la revendications 22, **caractérisé en ce que** le radiateur (114) peut être mis en circuit par des conduites de connexion (116, 117) qui sont raccordées aux vannes à plusieurs voies.

28. Dispositif de refroidissement selon la revendication 26 ou 27, **caractérisé en ce que** les vannes à plusieurs voies peuvent être pilotées électriquement ou thermostatiquement.

29. Dispositif de refroidissement selon l'une quelconque des revendications 23 à 28, **caractérisé en ce que** le circuit secondaire (113) présente un départ (113a) et un retour (113b), et **en ce qu'**une ligne de mise en court-circuit contrôlable est disposée entre le départ et le retour (113a, 113b).
